# EUROPEAN PATENT SPECIFICATION

(11) **EP 4 069 493 B1**
(45) Date of publication and mention of the grant of the patent: **14.08.2024**
(21) Application number: 20807498.9
(22) Date of filing: 21.10.2020
(51) Int. Cl.: B29C 63/02, B65C 9/18

(54) **APPARATUS FOR APPLYING AN ADHESIVE FILM ON A PLATE-LIKE ELEMENT**
VORRICHTUNG ZUM AUFBRINGEN EINER KLEBEFOLIE AUF EIN PLATTENFÖRMIGES ELEMENT
APPAREIL POUR APPLIQUER UN FILM ADHÉSIF SUR UN ÉLÉMENT EN FORME DE PLAQUE

(30) Priority: 05.12.2019 IT 201900023097
(43) Date of publication of application: 12.10.2022
(73) Proprietor: ECOSYS S.r.l., 31040 Meduna di Livenza (TV) (IT)
(72) Inventor: FESSEHAYE, Asefaw, 31040 Meduna di Livenza (TV) (IT)
(74) Representative: Giugni, Valter
(86) International application number: PCT/IB2020/059873
(87) International publication number: WO 2021/111205

(56) References cited:
- US-A- 6 045 616
- US-A1- 2001 017 181

## Description

### TECHNICAL FIELD OF INVENTION

The present invention relates to an apparatus for applying an adhesive film on a plate-like element.

### BACKGROUND OF THE INVENTION

In the prior art are known films of various types that are used to line plate-like elements having substantially flat surfaces, such as for example panels preferably for furniture elements, slabs of wood, metal, plastic, glass or the like.

The films used to line plate-like elements may have different functions, such as packing, protective, decorative or similar purposes. For example, the function of the film can be that of packing and providing to the plate-like element a temporary protection against mechanical actions during transportation, such as impacts, scratches or the like, of providing protection against foreign agents, such as dust, unwanted substances, light or the like, of providing a decoration/information, or further functions known in the prior art.

For this purpose, the film, having appropriate flexibility, comprises an adhesive face adapted to stick to a surface of the plate-like element that acts as an adhesion substrate. There are several methods with which the adhesion is achieved, and they are selected on the basis of the characteristics of the materials forming the film and the plate-like element, such as for example the use of a gluing substance on the adhesive face of the film and/or of the plate-like element, the use of characteristics of electrostatic attraction between the film and the plate-like element, or a combination thereof.

In the present description, a film adapted to adhere in any manner to a plate-like element to provide any function will be defined as "adhesive film", or simply "film", depending on the context.

Apparatuses used to apply an adhesive film on a plate-like element are known in the prior art and provide different characteristics based, for example, on the type of plate-like element.

Typically, a known apparatus for applying an adhesive film on a plate-like element comprises means for feeding the adhesive film, such as a reel of film, transport means, such as a set of rollers or a conveyor adapted to move the plate-like element toward a work head, such as a pressure roll, and cutting means, such as a cutting blade.

In operating conditions, the pressure roll is adapted to receive the adhesive film from the reel of film and to press it on the substrate surface of the plate-like element so as to apply a given pressure along a respective mutual contact line, that is, along a contact line between the pressure roll and the substrate surface of the plate-like element.

Specifically, the plate-like element is moved toward the pressure roll by means of the transport means, preferably automated, such as for example an automated conveyor, along a direction substantially perpendicular to the axis of rotation of the pressure roll so as to cause a rotation of the latter by means of the friction generated at said contact line.

The adhesive film, supplied by unwinding the reel, engages the external surface of the pressure roll, which, by its rotation brings the adhesive film toward the contact line. In this state, the pressure roll presses against the adhesive film and forces the adhesive face of the latter to adhere to the substrate surface of the plate-like element.

Thus, the part of the film that adheres to the plate-like element moves integral with the latter, causing a further unwinding of the reel for an additional covering of the plate-like element.

When an appropriate covering of the plate-like element is obtained, the adhesive film is cut by the cutting means. The cutting means are arranged near the external surface of the pressure roll, and their arrangement is selected, that is, adjusted, on the basis of the covering degree of the surface of the plate-like element that is to be obtained. Specifically, the cut is performed by actuating the cutting means, such as a mobile cutting blade, that are configured to press with a cutting portion of the same against the external surface of the pressure roller at the part engaged by the adhesive film that is to be cut.

Although apparatuses of known type operate satisfactorily for the application of adhesive films on different types of plate-like elements, they exhibit some drawbacks.

In particular, it is probable that the cutting means degrade some characteristics of the external surface of the pressure roller, such as for example the smoothness, due to a plurality of cutting procedures. Specifically, a plurality of cutting procedures damages the pressure roller by forming defects on the external surface of the latter, such as for example, grooves and/or projections.

In this state, it is probable that in operating conditions the pressure roller impresses, that is, transfers, said defects on the adhesive film, thus degrading its functional and/or aesthetic characteristics and, consequently, degrades the efficiency of the processing method. For example, the defects can cause a ripping of the film during the processing operations or they can increase the probability of entrapping air between the applied film and the plate-like element, thus lowering the quality of the product.

These drawbacks are particularly evident when the external surface of the pressure roll is made of a flexible material, such as for example an elastomeric material, that is selected to avoid damaging the substrate surface of the plate-like element during the processing steps. In this case, it is clearly more likely that the cutting means degrades the characteristics of the external surface of the pressure roll and causes defects on said roll.

Moreover, it is necessary to provide a plurality of cutting means variously arranged about the axis of rotation of the pressure roll to allow an adjustment of the covering degree of the plate-like element, making the structure and the construction of the apparatus more complex. For example, in some applications it is desirable to completely cover a surface of the plate-like element with the adhesive film, or in other applications it is desirable to leave one initial and/or end portion of the surface of the plate-like element without covering it with the adhesive film.

In addition, although a plurality of cutting means is provided, their positioning is limited by their sizes near the contact line between the pressure roller and the plate-like element, thus limiting the possibility of controlling the cut. In case, it is possible to provide cutting means wherein the position near the contact line can be adjusted, but in this case a structural and constructive complexity of the apparatus would be further increased.

Moreover, in prior-art apparatuses, even if the external surface of the pressure roller is smooth and free of defects, it is probable that the continuous rolling motion of the pressure roller causes air bubbles to form and become embedded between the applied film and the plate-like element, consequently degrading the effectiveness of the production process and the quality of the product.

Document US6045616A discloses an example of labelling machine comprising a rotating drum for applying labels to tubular containers. However, said rotating drum provides for a continuous rolling motion making more likely to embed air bubbles.

In addition, document US2001017181A1 discloses another labelling apparatus comprising an applicator drum for apply labels to tubular containers. However, also in this case, said applicator drum provides for a continuous rolling motion making more likely to embed air bubbles.

Finally, in prior-art apparatuses it is necessary to stop the transport means at every step of cutting the film adhering to a plate-like element to prearrange the processing of a further plate-like element.

Consequently, it is necessary to devise a solution that overcomes the problems described above.

### SUMMARY OF THE INVENTION

An objective of the present invention is to provide an apparatus adapted to effectively and reliably applying an adhesive film on a plate-like element.

In the scope of the above objective, one purpose of the present invention concerns the implementation of an apparatus comprising a work head adapted for applying in an effective and reliable manner an adhesive film on the plate-like element and wherein cutting means are prevented from damaging the work head during the step of cutting the adhesive film.

A further purpose concerns the implementation of an apparatus comprising a work head in which are provided a first contact portion and a second contact portion adapted respectively for positioning and pressing the adhesive film on the plate-like element. In this state, it is possible to broadly adjust the position of the adhesive film on the surface of the plate-like element, while maintaining an effective and reliable production process.

A further purpose concerns the implementation of an apparatus comprising a work head in which are provided cutting means integrated therewith. In this state it is possible to broadly adjust the covering degree of the plate-like element with the adhesive film, maintaining an effective and reliable production process.

A further purpose concerns the implementation of an apparatus comprising a work head in which are provided reversible holding means adapted to reversibly hold the adhesive film on the surface of the work head. In this state it is possible to secure precisely a positioning of the adhesive film on the work head, consequently guaranteeing an effective and reliable production process.

A further purpose concerns the implementation of an apparatus comprising a work head, the configuration of which is adapted to maintain in operating conditions a constant pressure on the adhesive film, guaranteeing as a consequence an effective and reliable production process.

A further purpose concerns the implementation of an apparatus comprising a work head having a simple construction, allowing considerable possibilities in designing the apparatus.

A further purpose concerns the implementation of an apparatus in which it is not necessary to stop the transport means with every step of cutting the adhesive film.

The above objective and purposes, and others that will be more evident later in the description, are achieved by means of an apparatus for applying an adhesive film on a plate-like element as defined in the independent claim 1; additional details will be defined in the dependent claims.

### BRIEF DESCRIPTION OF THE FIGURES

The additional characteristics and advantages of the apparatus for applying an adhesive film on a plate-like element, according to the presence invention, will become more evident in the description which follows relative to a preferred embodiment given purely by way of a non-limiting example, with reference to the following figures, wherein:
- Fig. 1 is a first perspective view of an apparatus for applying an adhesive film on a plate-like element, according to a preferred embodiment of the present invention;
- Fig. 2 is a second perspective view of the apparatus of Fig. 1;
- Fig. 3 is a back view of the apparatus of Fig. 1;
- Fig. 4 is a first perspective view of a work head of the apparatus of Fig. 1, according to a preferred embodiment of the present invention;
- Fig. 5 is a second perspective view of the work head of Fig. 4;
- Fig. 6 is a back view of the work head of Fig. 4;
- Fig. 7 is a view from below of the work head of Fig. 4;
- Fig. 8 is a view in cross section of the work head along a line A-A of Fig. 6;
- Fig. 9 is a schematic view of elements of the apparatus of Fig. 1, in a first processing step of application of an adhesive film on a plate-like element;
- Fig. 10 is a schematic view of the elements of Fig. 9, in a second processing step;
- Fig. 11 is a schematic view of the elements of Fig. 9, in a third processing step;
- Fig. 12 is a schematic view of the elements of Fig. 9, in a fourth processing step;
- Fig. 13 is a schematic view of the elements of Fig. 9, in a fifth processing step;
- Fig. 14 is a schematic view of the elements of Fig. 9, in a sixth processing step;
- Fig. 15 is a schematic view of the elements of Fig. 9, in a seventh processing step;
- Fig. 16 is a schematic view of the elements of Fig. 9, in an eighth processing step.

### DETAILED DESCRIPTION OF THE INVENTION

In the description which follows, terms such as "above", "below", "upper", "lower", "vertical", "horizontal" and the like refer to an apparatus, according to the present invention, in the normal arrangement of use as shown in the accompanying figures.

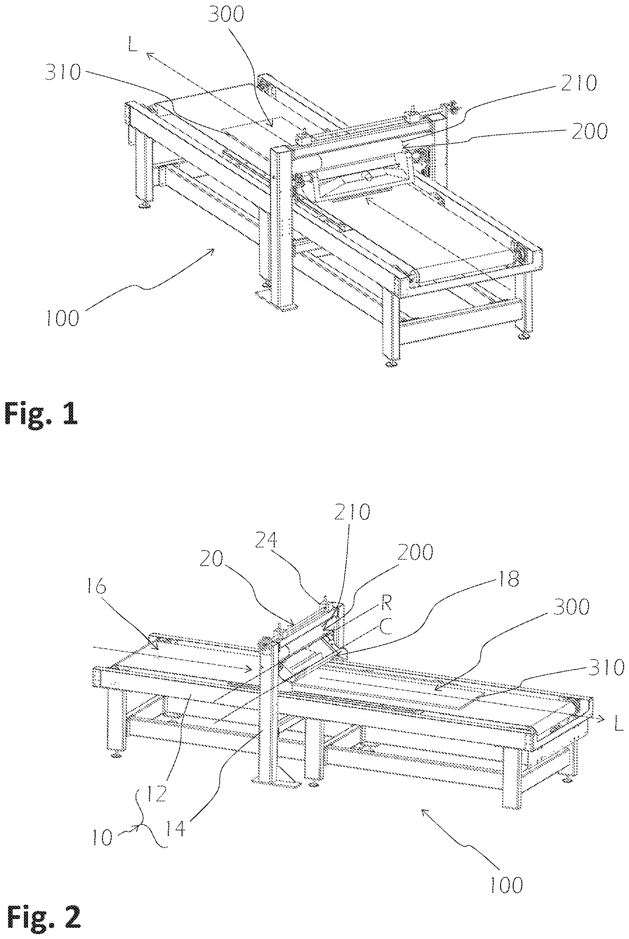

In Figs. 1 to 3 is shown an apparatus for applying an adhesive film 200 on a plate-like element 300, according to a preferred embodiment of the present invention.

Specifically, Figs. 1 and 2 show the apparatus 100 on which is arranged the plate-like element 300 having a substrate surface 310. On the substrate surface 310 is applied the adhesive film 200 which is supplied by feeding means 210 (for simplicity, in the enclosed figures the feeding means 210 will be shown only in Figs. 1 and 2).

In the present preferred embodiment, the plate-like element 300 is a multilayer wood panel provided with two main faces and having a substantially flat shape. One of the two faces of the plate-like element defines the substrate surface 310 on which the adhesive film 200 is applied by means of the apparatus 100. However, this selection is not limitative and the plate-like element can be any plate-like element formed with any material or combination of materials, such as for example a sheet of wood, metal, plastic, glass or the like.

In addition, in the present preferred embodiment, the adhesive film 200 is supplied to the apparatus 100 from appropriate feeding means 210, such as for example a reel of film arranged on an unwinding frame preferably provided on the apparatus 100 (the reel 210 of adhesive film 200 is shown only in Figs. 1 and 2). The adhesive film 200 has preferably a packing function to temporarily protect the substrate surface 310 of the plate-like element 300 from mechanical actions, such as impacts, scratches and the like. However, this selection is not limitative, and the adhesive film 200 can be supplied by other types of feeding means, and its function can be any function based on the type of plate-like element 300, such as or example a protection from foreign agents such as dust, unwanted substances, light and so on.

As is well known, an adhesive film 200 has two face, one of which is an adhesive face that is adapted to adhere to the substrate surface 310 of the plate-like element 300. For the sake of simplicity, in the present description it is assumed that the arrangement and/or orientation of the adhesive film 200 inside the apparatus 100 is such that its adhesive face is operatively turned toward the plate-like element 300, so as to be adapted to adhere to the substrate surface 310.

Referring in particular to Figs. 1 to 3, in the preferred embodiment the apparatus 100 comprises a support frame 10 including, in turn, a first frame portion 12 and a second frame portion 14.

The first frame portion 12 is substantially a horizontal structure similar to a table configured to support transport means 16. The second portion of the frame 14, on the other hand, is substantially a structure similar to a bridge that is configured to support a work head 18 above the transport means 16.

The transport means 16 are adapted to move the plate-like element 300 relative to the work head 18 along a transport axis L of the apparatus 100 in a transport direction toward said work head 18 (in the figures, the transport axis L is shown by means of a broken line-dot arrow and the transport direction is defined by the direction indicated by the broken line-dot arrow).

In this preferred embodiment the transport means 16 are a conveyor system of known type. The conveyor system 16 comprises a closed-loop belt, consisting of a flexible material, which is moved through rollers driven by automatic driving means of known type, such as an electric motor. Specifically, the plate-like element 300 is arranged on the upper surface of the conveyor of the transport means 16 and is carried by the latter along the transport axis L in a transport direction toward the work head 18. However, this selection is not limitative, and the transport means 16 can be any appropriate transport means, such as for example a system comprising a plurality of rollers, controlled by automatic driving means of known type, adapted to move the plate-like element 300 along the transport axis L in a transport direction toward the work head. 18.

The work head 18 has substantially the shape of an elongate body having a longitudinal axis arranged horizontally and transversely with respect to the transport axis L of the apparatus 100. The work head 18 is fixed to the second frame portion 14 through a height-adjusting system 20 configured to adjust a distance between the work head 18 and the transport means 16 on the basis of the thickness of the plate-like element 300. In this state, the work head 18 is adapted to operatively press against, or come into contact with, the substrate surface 310 of the plate-like element 300, at a contact line C coplanar with the substrate surface 310 and perpendicular to the transport axis L.

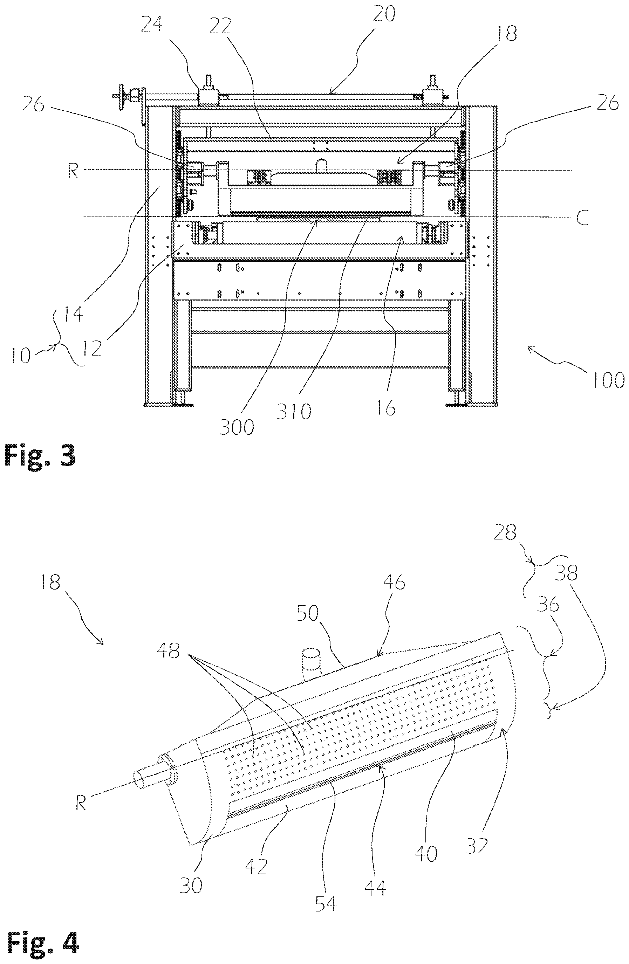

In the present preferred embodiment, the height-adjusting system 20 comprises a fork 22 (better shown in Fig. 3) that is fixed to a crosspiece of the second frame portion 14 through a screw control system 24 actuated, for example, manually through crank transmission means.

Specifically, the pressure with which the work head 18 presses at a contact line C is adjusted by means of the height-adjusting system 20 on the basis, for example, of the characteristics of the adhesive film 100 and/or of the plate-like element 300. As will be explained below, according to the present invention the work head 18 is adapted to operatively press the substrate surface 310 of the plate-like element 300 at the contact line C alternatively through one of its two distinct contact portions in given steps of the production process.

The work head 18 is connected to the arms of the fork 22 of the height-adjusting system 20 so as to rotate about a rotation axis R parallel to the contact line C. Specifically, the work head 18 is connected in a rotatable manner to the arms of the fork 22 through respective rotation actuation means 26 (shown in Fig. 3), preferably automatic, such as electrical rotation actuators connected in a known manner to the work head 18 and to the fork 22. The automatic rotation actuating means 26 are controlled by means of an electronic control unit (not shown in the figures) of the apparatus 100.

Moreover, the electronic control unit of the apparatus 100, is in communication with detection means (not shown in the figures), such as sensors, that are configured to detect the presence of a plate-like element 300 on the transport means 16 and/or the position of the plate-like element 300 with respect to the work head 18 and/or characteristics of the plate-like element 300, such as for example its edges and their distance with respect to the work head 18. The detection means are connected to the electronic control unit of the apparatus 100 so as to timing a rotation of the work head 18, driven by the rotation actuation means 26, to press on the substrate surface 310 of the plate-like element 300 at the contact line C, alternately through one of two distinct contact portions of the work head 18 in given steps of the processing operations, as will be explained later.

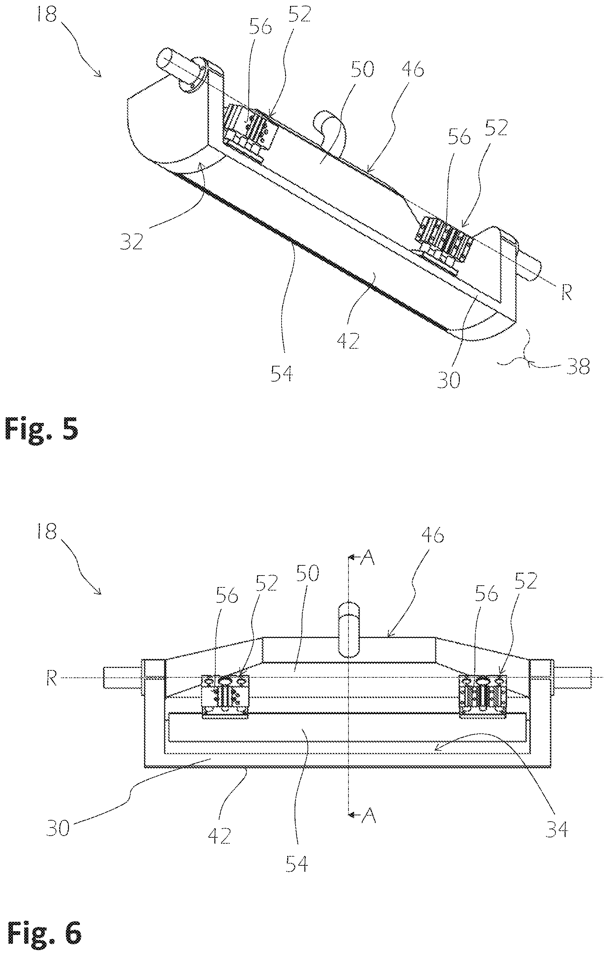

Referring in particular to Figs. 1 to 8, the work head 18 comprises a work surface 28 operatively facing the substrate surface 310 of the plate-like element 300. The work surface 28 is adapted to operatively receive the adhesive film 200 and to press the latter on the substrate surface 310 of the plate-like element 300 at a contact line C.

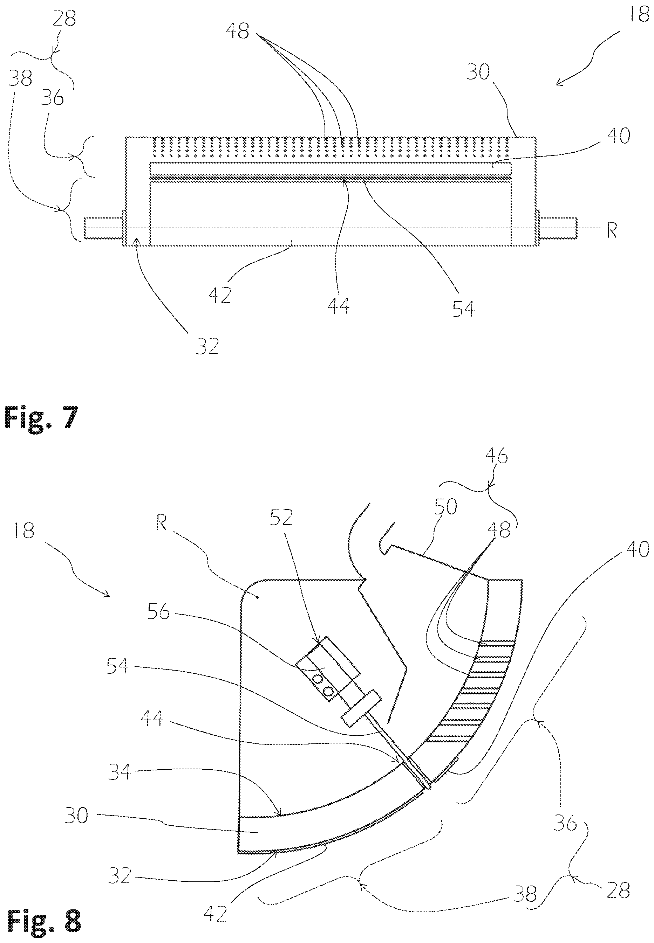

The work head 18 comprises a work wall 30 provided with a first face 32 and a second face 34 opposite the first face 32 and separate from the latter by a thickness of the work wall 30 (better shown in Fig. 8). The first face 32 of the work wall 30 operatively faces the substrate surface 310 of the plate-like element 300 and defines the work surface 28 of the work head 18.

The work surface 28 comprises a first contact portion 36 and a second contact portion 38 that are arranged in this order in the transport direction that leads the plate-like element 300 toward the work head 18 along the transport axis L of the apparatus 100.

Specifically, the work head 18 is adapted to rotate about the axis of rotation R parallel to said contact line C, by means of the rotation actuation means 26, between a first position and a second position wherein respectively at least a part of one of the first contact portion 36 and the second contact portion 38 presses operatively on the substrate surface 310 at the contact line C. In other words, the work head 18 is adapted to rotate about the axis of rotation R between a first position in which at least a part of the first contact portion 36 presses operatively on the substrate surface 310 at the contact line C, and a second position wherein at least a part of the second contact portion 38 presses operatively on the substrate surface 310 at the contact line C, as explained below.

In the preferred embodiment, the work wall 30 of the work head 18 defines a portion of a side wall of a hollow cylinder having its axis coincident with the axis of rotation R of the work head 18. In other words, the first contact portion 36 and the second contact portion 38 of the work surface 28 define at least partially a common side wall of a cylinder having its axis coincident with the axis of rotation R of the work head 18.

In this state, as explained below, advantageously the work head 18 is adapted to maintain a constant pressure, i.e. a continuous contact, along the contact line C during the processing steps to apply the adhesive film 200 on the substrate surface 310 of the substrate element 300.

Preferably, the first contact portion 36 and the second contact portion 38 of the work surface 28 comprise a respective flexible pressure layer, first 40 and second 42, at the respective part operatively adapted to press on the substrate surface 310 of the plate-like element 300 at the contact line C.

Advantageously, in this state, during the rotation of the work head 18, as explained below, in the two positions the substrate surface 310 of the element 300 is prevented from being damaged.

In the most preferred embodiment, the flexible pressure layers, first 40 and second 42, are at least partially made of an elastomeric material. Possibly, the flexible pressure layers, first 40 and second 42, are made at least partially of an anti-adherent elastomeric material, that is, a material that is adapted to provide a low friction coefficient and high slipperiness, so as to lower friction with the adhesive film 200. For example, the elastomeric material with which the flexible pressure layers, first 40 and second 42, are formed is natural rubber (NR), EPDM or the like, and provides a hardness lower than 80 Shore A (ISO 7619). If necessary, the anti-adherent elastomeric material is for example silicone, fluorinated silicone, or the like, or it is an elastomeric material comprising an additive adapted to lower the friction coefficient, such as for example EPDM comprising erucamide, oleamide, or the like.

Advantageously, in this state is guaranteed an effective and reliable control of the pressure operatively applied by the work head 18 on the substrate surface 310 of the plate-like element 30 at said contact line C. The possible use of an anti-adherent elastomeric material, moreover, advantageously prevents the generation of an excessive friction during the processing steps between the adhesive film 200 and the flexible pressure layers, first 40 and second 42, due to a relative movement between the adhesive film 200 and the work head 18, as will be explained later.

The first contact portion 36 and the second contact portion 38 of the work surface 28 are at least partially separated from each other by at least a through opening 44 (shown more clearly in Fig. 8) that passes through the work wall 30, that is, it goes through the thickness of the latter.

In the preferred embodiment, the through opening 44 is a slit that extends along the work wall 30 parallel to the contact line C and has an extension substantially at least equal to the length of the adhesive film 200.

In addition, the work head 18 includes reversible holding means 46 adapted to reversibly hold the adhesive film 200 on at least a part of the first contact portion 36 by means of a holding force. Specifically, as will be explained later, the reversible holding means 46 are adapted to hold the adhesive film 200 on at least a part of the first contact portion 36 in given steps of the processing the adhesive film 200, and are preferably adapted to maintain a sliding engagement of the adhesive film 200 on the first contact portion 36 and on the second contact portion 38 of the work surface 28 in further steps of the processing of the adhesive film 200.

In the preferred embodiment, the reversible holding means 46 are adapted to hold the adhesive film 200 on at least a part of the first contact portion 36 with a holding force which is lower than an adhesion force between the adhesive film 200 and the substrate surface 310 of the plate-like element 300, as will be explained later.

In this state, advantageously the work head 18 reliably receives the adhesive film 200, holds it integral with it in given processing steps and, at the same time, allows a reliable sliding of the adhesive film 200 on the first contact portion 36 and on the second contact portion 38 of the work surface 28 in further steps of the processing of the adhesive film 200, as will be explained later. Thus, an undesirable ripping of the adhesive film 200 is prevented during the processing steps and, at the same time, a reliable processing is guaranteed.

In the most preferred embodiment, the reversible holding means 46 comprise at least a suction port 48 and suction means (not shown in the figures), such as a vacuum pump or a suction fan in fluid communication with the work head 18 through a circuit. Specifically, the suction means are in fluid communication with at least a part of the work surface 28 of the work head 18 through at least a suction port 48 that passes through the work wall 30 at the first contact portion 36. In this state, the suction means, that is, the vacuum pump or the suction fan, generate a holding force, that is, a vacuum, adapted to hold the adhesive film 200 on at least a part of the first contact portion 36.

Preferably, the reversible holding means 46 also comprise a suction hood 50 integral with the work wall 30 of the work head 18. Specifically, suction means of the reversible holding means 46 are in fluid communication with at least a part of the work surface 28 through, in order, the suction hood 50 and a plurality of suction ports 48.

Advantageously, in this state by suitably dimensioning the suction hood 50 and appropriately selecting the dimensions and/or number and/or arrangement of the suction ports 48 it is possible to easily and effectively control the holding force with which the adhesive film 200 is held on the first contact portion 36 of the work surface 28 on the work head 18.

In the preferred embodiment, the part of the first contact portion 36 which is operatively adapted to press on the substrate surface 310 along said contact line C is arranged between the plurality of suction ports 48 and said at least a through opening 44 along the transport direction, that is, along the transport axis L of the apparatus 100.

In addition, the work head 18 comprises cutting means 52 located operatively in a position substantially opposite the work surface 28 with respect to the second face 34 of the work wall 30. In other words, the cutting means 52 are arranged so that in operative conditions the work surface 28 is substantially interposed between the cutting means 52 and the substrate surface 310 of the plate-like element 300 on which the adhesive film is made to adhere 200.

The cutting means 52 are provided with a cutting element 54, such as for example a blade, and cutting actuators 56, such as pneumatic pistons, adapted to actuate the movement of the cutting element 54. Specifically, when moved by the cutting actuators 56, the cutting element 54 is adapted to slidingly engage a respective one of said at least a through opening 44 so as to operatively project from the work surface 28 to cut the adhesive film 200 in a given step of the production process, as will be explained later.

The cutting means 52 are actuated by the electronic control unit (not shown in the figures) of the apparatus 100.

Moreover, the control unit of the apparatus 100 is in communication with the detection means (not shown in the figures), such as sensors, which, as mentioned previously, are configured to detect the presence of a plate-like element 300 on the transport means 16 and/or the position of the plate-like element 300 with respect to the work head 18 and/or characteristics of the plate-like element 300, such as for example its edges and their distance with respect to the work head 18. The detection means are connected to the electronic control unit of the apparatus 100 so as to appropriately timing an actuation of the cutting means 52 to cut the adhesive film 200 in a given step of the production process, as will be explained later.

In the preferred embodiment, the cutting means 52 are fixed to the cutting head 18 by means of known fastening means not shown in the figures. In other words, the cutting means 52 are adapted to rotate about the rotation axis R integral with the cutting head 18 and with its work wall 30.

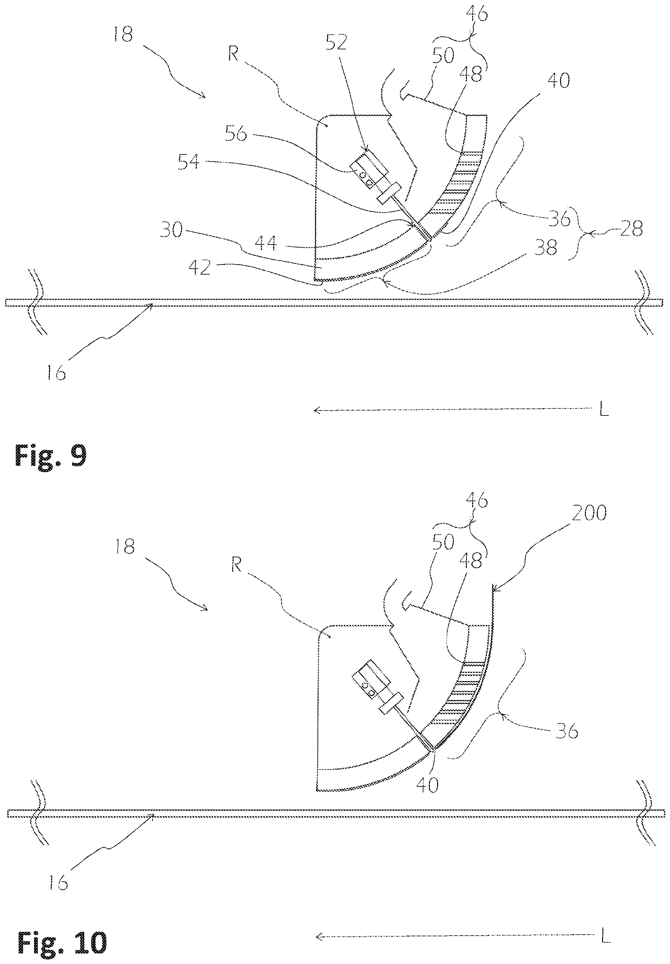

The operation of the apparatus 100 to apply the adhesive film 200 on the substrate surface 310 of the plate-like element 300, according to the present invention, will now be described with reference to Figs. 9 to 16, together with Fig. 8. For the sake of simplicity, Figs. 9 to 16 show the adhesive film 200, the plate-like element 300 and only some of the elements of the apparatus 100, such as the work head 18 and the transport means 16, in the different processing steps.

### Step a)

Fig. 9 shows the work head 18 and the transport means 16 of the apparatus 100. The transport means 16 are actuated to allow a movement of the plate-like element 300 along the transport axis L in a transport direction toward the work head 18. Meanwhile, the work head 18 is in the second position, in which the second contact portion 38 is substantially closer to the transport means 16 with respect to the first contact portion 36, that is, the second contact portion 38 is substantially at a lower height with respect to the first contact portion 36.

### Step b)

Afterwards, with reference to Fig. 10, the reversible holding means 46, that is, the suction means (not shown in the figure) are actuated. The adhesive film 200 (shown with a thick black line) is supplied by the feeding means 210 (not shown in the figure) and is applied on the first contact portion 36 of the work surface 28 of the work head 18. Specifically, the adhesive film 200 is applied on the first contact portion 36 so as to cover with the non-adhesive face, opposite the adhesive face, the suction ports 48 and the first flexible pressure layer 40, preferably the latter with a free edge of the adhesive film 200.

Thus, in this step the reversible holding means 46 are adapted to hold the adhesive film 200 on at least a part of the first contact portion 36 by means of the holding force, that is, by means of the vacuum generated by the suction means. Advantageously, in this state is guaranteed a precise positioning and the maintenance of the adhesive film 200 in contact with the first contact portion 36 thanks to the holding force generated by the reversible holding means 46, i.e. generated by the suction means. In particular, in this state it is unlikely that wrinkles can form on the adhesive film 200 that could create flaws in the successive steps.

This operation is typically performed manually by an operator when it is necessary to replace the feeding means 210, such as for example a new reel of adhesive film 200, by prearranging the apparatus 100 for the processing procedure.

### Step c)

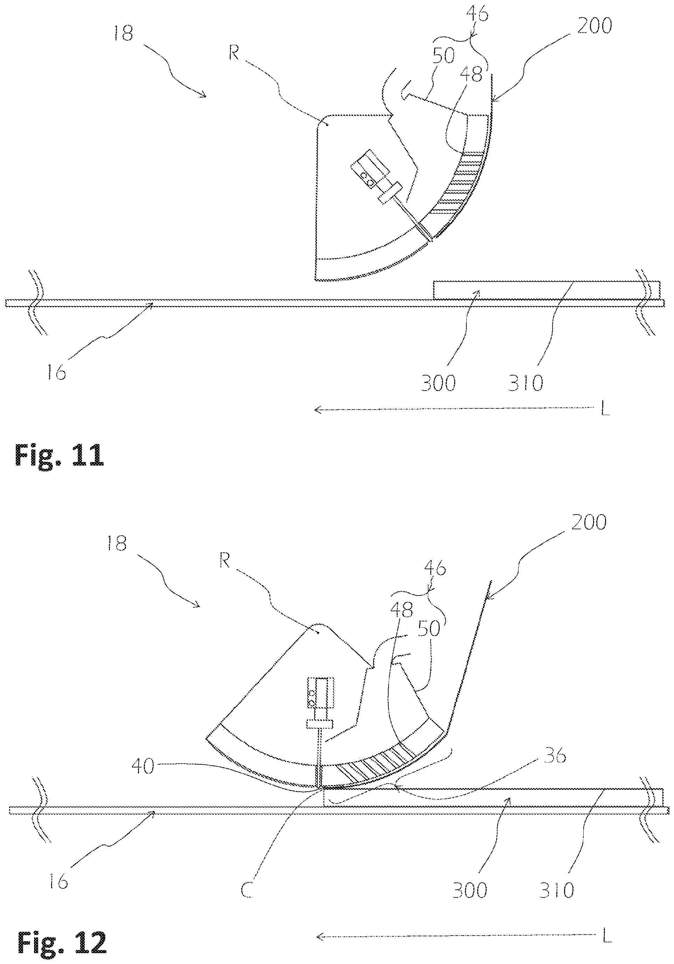

Then, referring to Fig. 11, on the transport means 16 is arranged the plate-like element 300 with its substrate surface 310 turned substantially toward the work head 18, that is, toward the adhesive face of the adhesive film 200.

In this state, the plate-like element 300 is moved with respect to the work head 18 in a transport direction toward the latter along the transport axis L of the apparatus 100 (as shown by the broken line-dot arrow).

### Step d)

Subsequently, referring to Fig. 12, the plate-like element 300 is moved further with respect to the work head 18 toward the contact line C along the transport axis L of the apparatus 100. Meanwhile, the work head 18 is rotated about the rotation axis R in the first position, by means of the actuation of the rotation actuation means 26 (not shown in the figure), and maintains that position.

In this phase, the adhesive film 200 moves integral with the work head 18 by the effect of the holding force generated by the reversible holding means 46.

Specifically, in the first position of the work head 18, the first contact portion 36 is operatively adapted to press on the substrate surface 310 at the contact line C through the first flexible pressure layer 40 on which the free edge of the adhesive film 200 is arranged.

In this state, at the contact line C the adhesive film 200 is interposed between the work head 18 and the substrate surface 310, and a pressure is applied therein adapted to achieve the adhesion, by means of an appropriate adhesion force, between the adhesive face of the adhesive film 200 and the substrate surfaced 310.

Preferably, in this phase the timing with which the work head 18 is rotated, on the basis of the relative position between the plate-like element 300 and the work head 18, is coordinated by the electronic control unit (not shown in the figure) of the apparatus 100 through signals outputted by the detection means (not shown in the figure). For example, in this phase the activation of the rotation actuation means 26, to cause the rotation, is carried out when the distance between the initial edge of the plate-like element 300 and the contact line C is a predetermined distance.

### Step e)

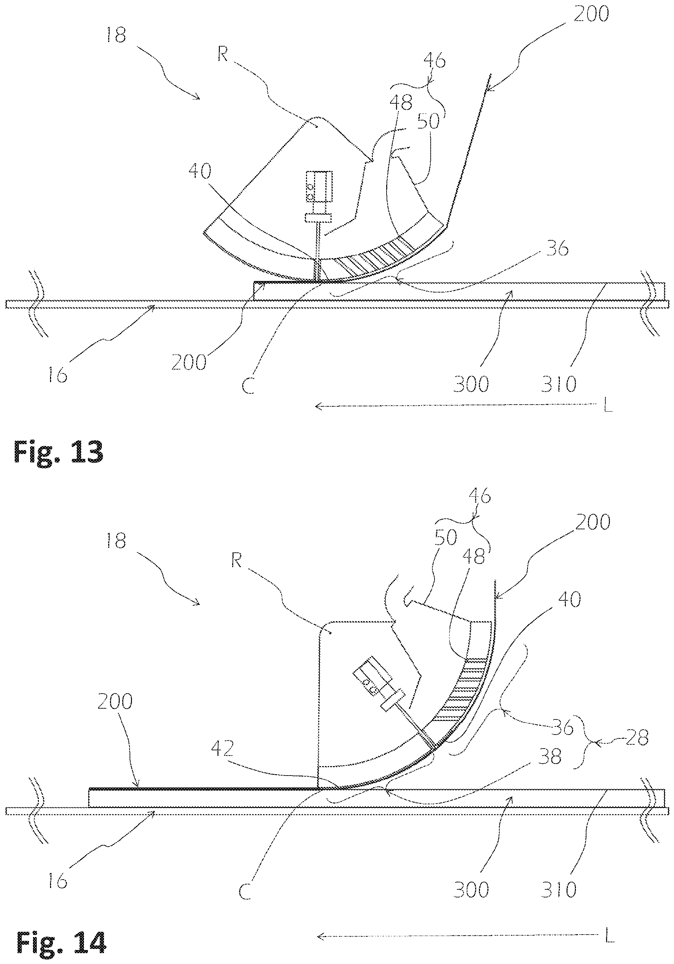

Then, referring to Fig. 13, the plate-like element 300 is moved further with respect to the work head 18 beyond the contact line C along the transport axis L of the apparatus 100. Meanwhile, the work head 18 is still in the first position.

In this state, the part of the adhesive film 200 that adheres to the substrate surface 310 moves integrally with the plate-like element 300 and causes a further sliding of the adhesive film 200 on the first contact portion 36 of the work surface 28 of the work head 18, that is, it causes a further covering of the substrate surface 310 with the adhesive film 200.

In this phase the reversible holding means 46 are preferably adapted to maintain a sliding engagement of the adhesive film 200 on the first contact portion 36 and on the second contact portion 38 of the work surface 28 by means of the holding force, i.e. by means of the vacuum generated by the suction means. Specifically, the holding force, with which a contact is maintained between the adhesive film 200 and the first contact portion 36, is appropriately selected, by adjusting the reversible holding means 46, so that it is lower than the adhesion force between the adhesive film 200 and the substrate surface 310.

### Step f)

Subsequently, referring to Fig. 14, the plate-like element 300 is moved further with respect to the work head 18 beyond the contact line C, causing a further covering of the substrate surface 310 with the adhesive film 200, as previously explained. Meanwhile, the work head 18 rotates about the rotation axis R and returns to the second position, by means of the activation of the rotation actuation means 26 (not shown in the figure), and maintains that position.

In this state, the adhesive film 200 slides on the first contact portion 36 and on the second contact portion 38 of the work surface 28 of the work head 18. Specifically, the adhesive film 200 slides on the first flexible pressure layer 40 of the first contact portion 36 and on the second flexible contact layer 42 of the second contact portion 38.

Preferably, in this step, the timing with which the work head 18 is rotated, based on the relative position between the plate-like element 300 and the work head 18, is coordinated by the electronic control unit (not shown in the figure) of the apparatus 100 through signals outputted by the detection means (not shown in the figure), or after a preset time. For example, in this step the activation of the rotation actuating means 26, to cause the rotation, is carried out after a preset lapse of time from step d) previously performed.

### Step g)

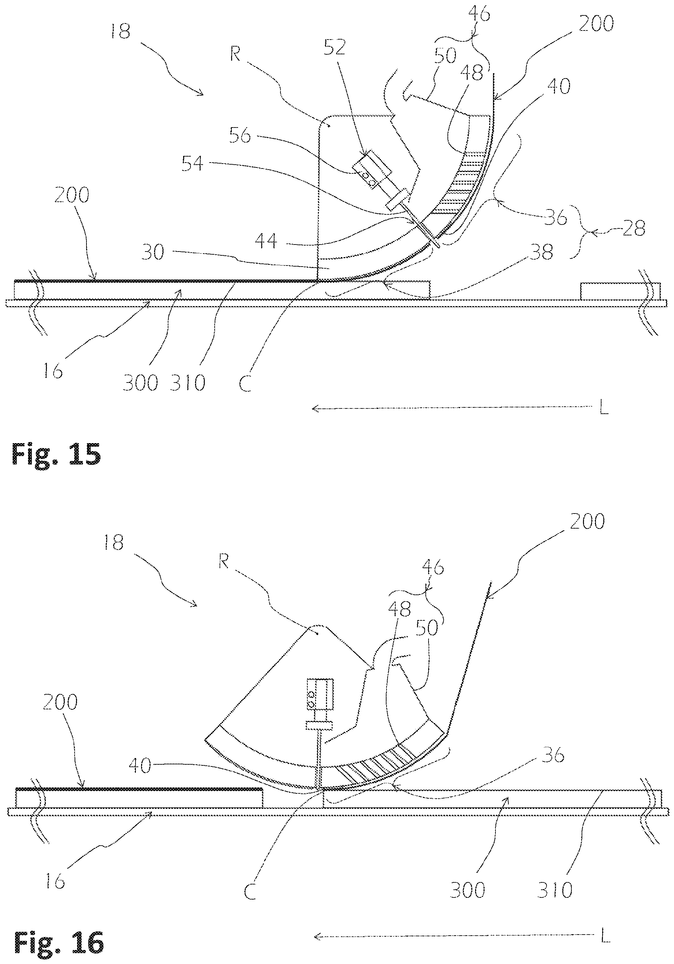

Thus, with reference to Fig. 15, the plate-like element 300 is moved further with respect to the work head 18 beyond the contact line C, causing a further covering of the substrate surface 310 with the adhesive film 200, as previously explained. Meanwhile, the work head 18 is still in the second position, and the cutting means 52 are actuated to cut the adhesive film 200.

Specifically, the cutting actuators 56 are operated to move the cutting element 54. The cutting element 54 slides into the through opening 44 and projects from the work surface 28 so as to cut the adhesive film 200.

Thus, the plate-like element 300 is moved further with respect to the work head 18 beyond the contact line C, bringing about the completion of the covering of the substrate surface 310 with the adhesive film 200. Specifically, the covering of the substrate surface 310 is completed with the portion of adhesive film 200 that is included between the contact line C and, substantially, the through opening 44 of the work wall 30.

It should be noted that, while the reversible holding means 46 are active, the adhesive film 200 is maintained into contact with the first contact portion 36 of the work surface 28 of the work head 18. Specifically, after the cut, the adhesive film 200 is now stationary and still positioned on the first contact portion 36 so as to cover the suction ports 48 and the first flexible pressure layer 40, as in the preceding step b).

Preferably, in this step the timing with which the cutting means 52 are actuated, based on the relative position between the plate-like element 300 and the work head 18, is coordinated by the electronic control unit (not shown in the figure) of the apparatus 100 through signals outputted by the detection means (not shown in the figure). For example, in this phase the activation of the cutting means 52, to cut the adhesive film 200, is carried out when the distance between the end edge of the plate-like element 300 and the contact line C is a preset distance.

### Step h)

Subsequently, with reference to Fig. 16, the previous steps from c) to g) can be performed again to apply the adhesive film 200 on the substrate surface 310 of another plate-like element 300 without stopping the transport means 16 to arrange the processing of the additional plate-like element.

Specifically, as the reversible holding means 46 are active, as described in the preceding phase, advantageously a precise positioning and maintenance of the adhesive film 200 in contact with the first contact portion 36 of the work head 18 is guaranteed to apply the adhesive film 200 on the substrate surface 310 of another plate-like element 300.

It is clear that with this configuration, advantageously, the apparatus 100 according to the present invention guarantees an effective and reliable processing to apply the adhesive film 200 on the substrate surface 310 of a plate-like element 300.

In the preferred embodiment, the work wall 30 of the work head 18 defines a portion of a side wall of a hollow cylinder whose axis coincides with the axis of rotation R of the work head 18. Specifically, in this state the work head 18 is adapted to maintain a constant pressure along the contact line C during the processing steps, in particular in step f), in which there is the change in the position of the work head 18 from the first to the second position.

Thus, the product obtained from processing by means of the apparatus 100, that is, the element 300 covered with the adhesive film 200, provides constant covering characteristics and it is unlikely that air will be embedded between the applied adhesive film 200 and the plate-like element 300. In fact, the work head 18 does not provide a continuous rolling motion but provides substantially two alternative positions in which it presses the adhesive film 200 and smoot it out on the contact surface 310 of the plate-like element 300, consequently reducing the probability of embedding air between the applied adhesive film 200 and the plate-like element 300.

In addition, in the preferred embodiment, the first contact portion 36 and the second contact portion 38 of the work surface 28 comprise a respective flexible pressure state, first 40 and second 42. Specifically, in this state, during the processing steps a rotation of the work head 18 is prevented from damaging the substrate surface 310 of the element 300.

In addition, the use of an elastomeric material to form the flexible pressure layers, first 40 and second 42, guarantees an effective and reliable control of the pressure applied operatively by the work head 18 on the substrate surface 310 of the plate-like element 300 at the contact line C. The possible use of an anti-adherent elastomeric material to form the flexible pressure layers, first 40 and second 42, prevents the generation of an excessive friction during the processing steps between the adhesive film 200 and the flexible pressure layers, first 40 and second 42, that could otherwise damage the adhesive film 200.

In addition, the reversible holding means 46 are adapted to hold the adhesive film 200 on at least a part of the first contact portion 36 with a holding force that is lower than an adhesion force between the adhesive film 200 and the substrate surface 310 of the plate-like element 300. In this state, advantageously the work head 18 receives reliably the adhesive film 200, maintains it integral with itself in the steps from b) to d) and, at the same time, allows a reliable sliding of the adhesive film 200 on the first contact portion 36 and on the second contact portion 38 in the steps from e) to g). Therefore is guaranteed a precise positioning and maintenance of the adhesive film 200 in contact with the work head 18 and is prevented an unwanted ripping or formation of wrinkles on the adhesive film 200 in the phases of the production process.

In addition, in step g) the reversible holding means 46 are adapted to hold, on at least a part of the first contact portion 36, the portion of adhesive film 200 that is upstream of the through opening 44. Thus, it is not necessary to stop the transport means 16 at each step of cutting the film that adheres to a plate-like element to prearrange the processing of an additional plate-like element.

In addition, advantageously it is possible to adjust in a simple manner a desired degree of covering of the substrate surface 310 of the plate-like element 300. Specifically, in steps d) and g) the timing with which, respectively, the work head 18 is rotated and the cutting means 52 are actuated can be appropriately selected to adjust a degree of covering of the substrate surface 310. For example, in step d) it is possible to delay the rotation of the work head 18 to make the adhesive film 200 stick on a desired part of the substrate surface 310, and/or in step g) it is possible to advance the actuation of the cutting means 52 to leave uncovered one end part of the substrate surface 310.

It is evident that additional embodiments of the present invention are possible, without departing from the scope claimed therein.

For example, in the previously described embodiment the work wall 30 of the work head 18 defines a portion of a side wall of a hollow cylinder whose axis coincides with the rotation axis R of the work head 18.

However, the work wall 30 of the work head 18 can have further configurations, such as for example a flat shape. In this case, the rotation axis R and the contact line C substantially coincide.

Where appropriate, in further embodiments the work wall 30 may define a portion of a hollow right-angle polyhedron having a polygonal cross section and, preferably, beveled edges, or the like.

Moreover, in the embodiment previously described the reversible holding means 46 include suction means in fluid communication with at least a part of the work surface 28 through at least a suction port 48 and a suction hood 50. However, it is possible to provide an embodiment in which the reversible holding means 46 are means of different type. For example, the reversible holding means 46 may be a layer of material adapted to hold the adhesive film 200 by electrostatic attraction with a holding force that is lower than an adhesion force between the adhesive film 200 and the substrate surface 310 of the plate-like element 300. Alternatively, the reversible holding means 46 can be an appropriate fixing element, possibly automatic, having a holding force that is lower than an adhesion force between the adhesive film 200 and the substrate surface 310 of the plate-like element 300.

Moreover, in the preferred embodiment described above the first contact portion 36 and the second contact portion 38 of the work surface 28 include a respective flexible pressure layer, first 40 and second 42. However, it is possible to provide for an embodiment in which only one flexible pressure layer, first 40 and second 42, or none at all can be provided, for example by properly selecting the material with which the work wall 30 of the work head 18 is made.

Moreover, in the preferred embodiment previously described the reversible holding means 46 are substantially always active in the different processing phases. However, it is possible to provide an embodiment in which the timing with which the reversible holding means 46 are activated is appropriately selected on the basis of the processing step. For example, it is possible to provide an embodiment in which the electronic control unit of the apparatus 100 activates the reversible holding means 46 in the steps from b) to d) and in step g) and, instead, disables the reversible holding means 46 in the other steps. Alternatively, it is possible to provide an embodiment in which the electronic control unit of the apparatus 100 activates the reversible holding means 46 in the steps from b) to d) and in step g) and, instead, reduces the holding force generated by the reversible holding means 46 in the other steps.

Moreover, in the previously described preferred embodiment the reversible holding means 46 include suction means, such as a vacuum pump or a suction fan, that are in fluid communication with at least a suction port 48 formed at the first contact portion 36. However, it is possible to provide an embodiment in which there is at least a suction port 48 also in the second contact portion 38. Advantageously, in this state in step g) the portion of adhesive film 200 that is included between the contact line C and the through opening 44 of the work wall 30 does not fall suddenly by effect of gravity and, consequently, there is a reduced probability of forming unwanted wrinkles or air bubbles.

If necessary, it is possible to have embodiments in which the suction ports 48 extend through the work wall 30 and the flexible pressure layers, first 40 and optionally second 42, at the first contact portion 36 and, optionally, at the second contact portion 38.

Moreover, in the preferred embodiment described before, the through opening 44 is a slit and the cutting element 54 is a blade, although this selection is not limitative. For example, it is possible to provide an embodiment in which there is a plurality of through openings 44, such as slits, adapted to be slidingly engaged by a corresponding plurality of cutting elements 54, such as blades.

Moreover, in the embodiment described above, in step d) the work head 18 rotates substantially by following the movement of the plate-like element 300. However, it is possible to provide an embodiment in which in step d) the work head is already in the first position even before the plate-like element 300 reaches the contact line C.

Moreover, in the preferred embodiment described previously the transport means 16 move the plate-like element 300 toward the work head 18. However, it is possible to provide an embodiment in which the work head 18 and the plate-like element 300 provide a relative movement along the transport axis L. For example, it is possible to provide an embodiment in which the second frame portion 14 is slidingly connected to the first frame portion 12 through transport means 16, such as an automatic moving system on tracks, so as to move the work head 18 along the transport axis L in a transport direction that achieves a relative displacement of the plate-like element 300 toward the work head 18.

From the above description, it is evident that important results have been achieved, overcoming the drawbacks of the prior art, making it possible to make an apparatus 100 adapted to apply in an effective and reliable manner an adhesive film 200 on a plate-like element 300.

Specifically, the work head 18 of the apparatus 100 is adapted to apply, effectively and reliably, the adhesive film 200 on the plate-like element 300 and, moreover, its work surface 28 is not damaged by the cutting means 52 in the different processing steps.

Moreover, the work head 18 of the apparatus 100 makes it possible to easily adjust the positioning of the adhesive film 200 on the substrate surface 310 of the plate-like element 300, and also an easy control of the covering degree of the latter.

Moreover, the work head 108 of the apparatus 100 is adapted to maintain in operating conditions a constant pressure on the adhesive film 200, making it unlikely that air can be embedded between the adhesive film 200 and the plate-like element 300 during the different processing steps.

Moreover, the work head 18 of the apparatus 100 provides for a simple construction, and consequently allowing considerable possibilities in designing of the apparatus 100.

Naturally, the materials and equipment used to achieve the present invention, as well as the shape and dimensions of the individual elements, can be the most appropriate for the specific requirements.

## Claims

1. Apparatus (100) for applying an adhesive film (200) on a substrate surface (310) of a plate-like element (300), said apparatus (100) comprising:
a support frame (10),
transport means (16) adapted to mutually move said plate-like element (300) with respect to a work head (18) along a transport axis (L) in a transport direction towards said work head (18), wherein
said work head (18) comprises a work surface (28) operatively facing said substrate surface (310) of said plate-like element (300), said work surface (28) being operatively adapted to receive said adhesive film (200) and to press the latter on said substrate surface (310) at a contact line (C) coplanar to said substrate surface (310) and perpendicular to said transport axis (L),
cutting means (52) adapted to cut said adhesive film (200), wherein said work head (18) comprises a work wall (30) provided with a first face (32) defining said work surface (28) and a second face (34) opposite to said first face (32),
said work surface (28) comprising a first contact portion (36) and a second contact portion (38) arranged in this order along said transport direction,
said first contact portion (36) and said second contact portion (38) being at least partially separated from each other by at least a through opening (44) which passes through said work wall (30),
said work head (18) comprising reversible holding means (46) adapted to reversibly hold said adhesive film (200) on at least a part of said first contact portion (36) and optionally on at least a part of said second contact portion (38) of said work surface (28),
said cutting means (52) being opposite to said work surface (28) with respect to said second face (34) of said work wall (30), and being also provided with at least a cutting element (54) adapted to slidingly engage a respective one of said at least a through opening (44), and
said work head (18) being adapted to rotate about a rotation axis (R) parallel to said contact line (C) between a first position wherein at least a part of said first contact portion (36) operatively presses on said surface of substrate (310) at said contact line (C), and a second position wherein at least a part of said second contact portion (38) operatively presses on said substrate surface (310) at said contact line (C), said work head (18) being **characterized in that** it is further adapted to operatively maintain said second position.

2. The apparatus (100) according to claim 1, wherein said first contact portion (36) and said second contact portion (38) of said work surface (28) at least partially define a common side wall of a cylinder having axis coincident with said rotation axis (R).

3. The apparatus (100) according to claim 1 or 2, wherein said reversible holding means (46) are adapted to hold said adhesive film (200) on at least a part of said first contact portion (36) and optionally of said second contact portion (38) with an holding force lower than an adhesion force between said adhesive film (200) and said substrate surface (310) of said plate-like element (300).

4. The apparatus (100) according to any of claims 1 to 3, wherein said reversible holding means (46) comprise suction means in fluid communication with at least a part of said work surface (28) through at least a suction port (48) of said work wall (30).

5. The apparatus (100) according to claim 4, wherein said reversible holding means (46) comprise a suction hood (50) integral with said work wall (30) of said work head (18),said suction hood (50) being in fluid communication with and interposed between said suction means and said at least a suction port (48).

6. The apparatus (100) according to claim 4 or 5, wherein said at least a part of said first contact portion (36) which is operatively adapted to press on said substrate surface (310) is arranged between said at least a suction port (48) and said at least a through opening (44).

7. The apparatus (100) according to any of claims 1 to 6, wherein said cutting means (52) are adapted to rotate about said rotation axis (R) integral with said work wall (30) of said work head (18).

8. The apparatus (100) according to any of claims 1 to 7, wherein at least one of said first contact portion (36) and said second contact portion (38) of said work surface (28) comprises a flexible pressure layer (40, 42) on the respective at least a part operatively adapted to press on said substrate surface (310) at said contact line (C).

9. The apparatus (100) according to claim 8, wherein said flexible pressure layer (40, 42) is at least partially made of an elastomeric material.

10. The apparatus (100) according to claim 8 or 9, wherein said flexible pressure layer (40, 42) is at least partially made of an anti-adherent elastomeric material.

## Patentansprüche

1. Vorrichtung (100) zum Aufbringen einer Klebefolie (200) auf eine Substratoberfläche (310) eines plattenförmigen Elements (300), wobei die Vorrichtung (100) umfasst:
einen Tragrahmen (10),
eine Transporteinrichtung (16), die angepasst ist, um das plattenförmige Element (300) mit Bezug auf einen Arbeitskopf (18) entlang einer Transportachse (L) in einer Transportrichtung hin zum Arbeitskopf (18) gegeneinander zu bewegen, wobei
der Arbeitskopf (18) eine Arbeitsfläche (28) umfasst, die der Substratfläche (310) des plattenförmigen Elements (300) operativ zugewandt ist, wobei die Arbeitsfläche (28) operativ angepasst ist, um die Klebefolie (200) aufzunehmen und letztere auf die Substratoberfläche (310) an einer Kontaktlinie (C) zu drücken, die zur Substratoberfläche (310) koplanar und zur Transportachse (L) rechtwinklig ist,
eine Schneideinrichtung (52), die angepasst ist, um die Klebefolie (200) zu schneiden, wobei
der Arbeitskopf (18) eine Arbeitswand (30) umfasst, die mit einer ersten Fläche (32), die die Arbeitsfläche (28) definiert, und einer zweiten Fläche (34) versehen ist, die der ersten Fläche (32) gegenüberliegt,
wobei die Arbeitsfläche (28) einen ersten Kontaktteil (36) und einen zweiten Kontaktteil (38) umfasst, die in dieser Reihenfolge entlang der Transportrichtung angeordnet sind,
wobei der erste Kontaktteil (36) und der zweite Kontaktteil (38) wenigstens teilweise durch wenigstens eine Durchgangsöffnung (44) voneinander getrennt sind, die durch die Arbeitswand (30) verläuft,
wobei der Arbeitskopf (18) eine reversible Halteeinrichtung (46) umfasst, die angepasst ist, um die Klebefolie (200) auf wenigstens einem Teil des ersten Kontaktteils (36) und optional auf wenigstens einem Teil des zweiten Kontaktteils (38) der Arbeitsfläche (28) reversibel zu halten,
wobei die Schneideinrichtung (52) der Arbeitsfläche (28) mit Bezug auf die zweite Fläche (34) der Arbeitswand (30) gegenüberliegt und ebenfalls mit wenigstens einem Schneidelement (54) versehen ist, das angepasst ist, um in eine jeweilige der wenigstens einen Durchgangsöffnung (44) gleitend einzugreifen, und
der Arbeitskopf (18) angepasst ist, um sich um eine Drehachse (R) parallel zur Kontaktlinie (C) zwischen einer ersten Position, wobei wenigstens ein Teil des ersten Kontaktteils (36) operativ auf die Oberfläche des Substrats (310) an der Kontaktlinie (C) drückt, und einer zweiten Position zu drehen, wobei wenigstens ein Teil des zweiten Kontaktteils (38) operativ auf die Substratoberfläche (310) an der Kontaktlinie (C) drückt, wobei der Arbeitskopf (13) **dadurch gekennzeichnet ist, dass** er des Weiteren angepasst ist, um die zweite Position operativ beizubehalten.

2. Vorrichtung (100) nach Anspruch 1, wobei der erste Kontaktteil (36) und der zweite Kontaktteil (38) der Arbeitsfläche (28) wenigstens teilweise eine gemeinsame Seitenwand eines Zylinders mit einer Achse definieren, die mit der Drehachse (R) zusammenfällt.

3. Vorrichtung (100) nach Anspruch 1 oder 2, wobei die reversible Halteeinrichtung (46) angepasst ist, um die Klebefolie (200) auf wenigstens einem Teil des ersten Kontaktteils (36) und optional des zweiten Kontaktteils (38) mit einer Haltekraft zu halten, die geringer ist als eine Adhäsionskraft zwischen der Klebefolie (200) und der Substratoberfläche (310) des plattenförmigen Elements (300).

4. Vorrichtung (100) nach einem der Ansprüche 1 bis 3, wobei die reversible Halteeinrichtung (46) eine Ansaugeinrichtung in Fluidverbindung mit wenigstens einem Teil der Arbeitsfläche (28) durch wenigstens eine Ansaugöffnung (48) der Arbeitswand (30) umfasst.

5. Vorrichtung (100) nach Anspruch 4, wobei die reversible Halteeinrichtung (46) eine Ansaughaube (50) umfasst, die mit der Arbeitswand (30) des Arbeitskopfes (18) einstückig ausgebildet ist, wobei die Ansaughaube (50) mit der Ansaugeinrichtung und der wenigstens einen Ansaugöffnung (48) in Fluidverbindung steht und zwischen diesen angeordnet ist.

6. Vorrichtung (100) nach Anspruch 4 oder 5, wobei der wenigstens eine Teil des ersten Kontaktteils (36), der operativ angepasst ist, um auf die Substratoberfläche (310) zu drücken, zwischen der wenigstens einen Ansaugöffnung (48) und der wenigstens einen Durchgangsöffnung (44) angeordnet ist.

7. Vorrichtung (100) nach einem der Ansprüche 1 bis 6, wobei die Schneideinrichtung (52) angepasst ist, um um die mit der Arbeitswand (30) des Arbeitskopfes (18) einstückig ausgebildete Rotationsachse (R) zu rotieren.

8. Vorrichtung (100) nach einem der Ansprüche 1 bis 7, wobei wenigstens der erste Kontaktteil (36) oder der zweite Kontaktteil (38) der Arbeitsfläche (28) eine flexible Druckschicht (40, 42) auf dem jeweiligen wenigstens einen Teil umfasst, der operativ angepasst ist, um auf die Substratoberfläche (310) an der Kontaktlinie (C) zu drücken.

9. Vorrichtung (100) nach Anspruch 8, wobei die flexible Druckschicht (40, 42) wenigstens teilweise aus einem elastomeren Material besteht.

10. Vorrichtung (100) nach Anspruch 8 oder 9, wobei die flexible Druckschicht (40, 42) wenigstens teilweise aus einem nicht haftenden elastomeren Material besteht.

## Revendications

1. - Appareil (100) pour appliquer un film adhésif (200) sur une surface de substrat (310) d'un élément en forme de plaque (300), ledit appareil (100) comprenant :
un bâti de support (10),
des moyens de transport (16) agencés pour déplacer mutuellement ledit élément en forme de plaque (300) par rapport à une tête de travail (18) le long d'un axe de transport (L) dans une direction de transport vers ladite tête de travail (18),
ladite tête de travail (18) comprenant une surface de travail (28) faisant face de manière fonctionnelle à ladite surface de substrat (310) dudit élément en forme de plaque (300), ladite surface de travail (28) étant agencée de manière fonctionnelle pour recevoir ledit film adhésif (200) et pour presser ce dernier sur ladite surface de substrat (310) à une ligne de contact (C) coplanaire à ladite surface de substrat (310) et perpendiculaire audit axe de transport (L),
des moyens de coupe (52) agencés pour couper ledit film adhésif (200),
ladite tête de travail (18) comprenant une paroi de travail (30) comportant une première face (32) définissant ladite surface de travail (28) et une seconde face (34) opposée à ladite première face (32),
ladite surface de travail (28) comprend une première partie de contact (36) et une seconde partie de contact (38) disposées dans cet ordre le long de ladite direction de transport,
ladite première partie de contact (36) et ladite seconde partie de contact (38) étant au moins partiellement séparées l'une de l'autre par au moins une ouverture traversante (44) qui traverse ladite paroi de travail (30),
ladite tête de travail (18) comprenant des moyens de maintien réversible (46) agencés pour maintenir de manière réversible ledit film adhésif (200) sur au moins une partie de ladite première partie de contact (36) et facultativement sur au moins une partie de ladite seconde partie de contact (38) de ladite surface de travail (28),
lesdits moyens de coupe (52) étant opposés à ladite surface de travail (28) par rapport à ladite seconde face (34) de ladite paroi de travail (30), et comportant également au moins un élément de coupe (54) agencé pour s'engager de manière coulissante dans l'une, respective, de ladite au moins une ouverture traversante (44), et
ladite tête de travail (18) étant agencée pour tourner autour d'un axe de rotation (R) parallèle à ladite ligne de contact (C) entre une première position, dans laquelle au moins une partie de ladite première partie de contact (36) appuie de manière fonctionnelle sur ladite surface de substrat (310) à ladite ligne de contact (C), et une seconde position dans laquelle au moins une partie de ladite seconde partie de contact (38) appuie de manière fonctionnelle sur ladite surface de substrat (310) à ladite ligne de contact (C),
ladite tête de travail (18) étant **caractérisée par le fait qu'**elle est en outre agencée pour maintenir de manière fonctionnelle ladite seconde position.

2. - Appareil (100) selon la revendication 1, dans lequel ladite première partie de contact (36) et ladite seconde partie de contact (38) de ladite surface de travail (28) définissent au moins partiellement une paroi latérale commune d'un cylindre ayant un axe coïncidant avec ledit axe de rotation (R).

3. - Appareil (100) selon la revendication 1 ou 2, dans lequel lesdits moyens de maintien réversible (46) sont agencés pour maintenir ledit film adhésif (200) sur au moins une partie de ladite première partie de contact (36) et facultativement de ladite seconde partie de contact (38) avec une force de maintien inférieure à une force d'adhérence entre ledit film adhésif (200) et ladite surface de substrat (310) dudit élément en forme de plaque (300) .

4. - Appareil (100) selon l'une quelconque des revendications 1 à 3, dans lequel lesdits moyens de maintien réversible (46) comprennent des moyens d'aspiration en communication fluidique avec au moins une partie de ladite surface de travail (28) à travers au moins un orifice d'aspiration (48) de ladite paroi de travail (30) .

5. - Appareil (100) selon la revendication 4, dans lequel lesdits moyens de maintien réversible (46) comprennent un capot d'aspiration (50) d'un seul tenant avec ladite paroi de travail (30) de ladite tête de travail (18), ledit capot d'aspiration (50) étant en communication fluidique avec lesdits moyens d'aspiration et ledit au moins un orifice d'aspiration (48) et interposé entre ceux-ci .

6. - Appareil (100) selon la revendication 4 ou 5, dans lequel ladite au moins une partie de ladite première partie de contact (36) qui est agencée de manière fonctionnelle pour appuyer sur ladite surface de substrat (310) est disposée entre ledit au moins un orifice d'aspiration (48) et ladite au moins une ouverture traversante (44).

7. - Appareil (100) selon l'une quelconque des revendications 1 à 6, dans lequel lesdits moyens de coupe (52) sont agencés pour tourner autour dudit axe de rotation (R) d'un seul tenant avec ladite paroi de travail (30) de ladite tête de travail (18).

8. - Appareil (100) selon l'une quelconque des revendications 1 à 7, dans lequel au moins une de ladite première partie de contact (36) et de ladite seconde partie de contact (38) de ladite surface de travail (28) comprend une couche de pression souple (40, 42) sur l'au moins une partie respective agencée de manière fonctionnelle pour appuyer sur ladite surface de substrat (310) à ladite ligne de contact (C).

9. - Appareil (100) selon la revendication 8, dans lequel ladite couche de pression souple (40, 42) est au moins partiellement faite d'un matériau élastomère.

10. - Appareil (100) selon la revendication 8 ou 9, dans lequel ladite couche de pression souple (40, 42) est au moins partiellement faite d'un matériau élastomère antiadhérent.
